# EUROPÄISCHE PATENTSCHRIFT

(11) **EP 1 829 768 B1**
(45) Veröffentlichungstag und Bekanntmachung des Hinweises auf die Patenterteilung: **12.08.2009**
(21) Anmeldenummer: 07003819.5
(22) Anmeldetag: 24.02.2007
(51) Int. Cl.: B62D 25/00

(54) **Montageträger-Baugruppe für Frontends**
Cross member assembly for front ends
Composant de support de montage pour extrémités frontales

(30) Priorität: 03.03.2006 DE 102006009902
(43) Veröffentlichungstag der Anmeldung: 05.09.2007
(73) Patentinhaber: HBPO GmbH, 59557 Lippstadt (DE)
(72) Erfinder: Hemmersmeier, Ralf, 59557 Lippstadt (DE); Schlüter, Sascha, 26842 Ostrhauderfehn (DE); Bauer, Vitalij, 59597 Erwitte-Völlinghausen (DE)
(74) Vertreter: Schober, Mirko

(56) Entgegenhaltungen:
- EP-A- 1 072 476
- EP-A- 1 072 501
- WO-A-02/36414
- WO-A-03/053768
- FR-A- 2 805 497

## Beschreibung

Die Erfindung bezieht sich auf eine Montagegruppe für Frontends von auf einer gemeinsamen Plattform basierenden Fahrzeugaufbauten von Personen- und Kleinlastwagen, bestehend aus Montageträgern, welche jeweils ein Oberteil mit zumindest einem oberen Querträger sowie seitlich wegstehenden Scheinwerferträgern und ein Unterteil mit wenigstens zwei seitlichen Vertikalträgern aufweisen, wobei die Vertikalträger des Unterteils an den oberen Querträger des Oberteils anschließen.

Bei vormontierbaren Frontends, wie sie heute für Personen- und Kleinlastkraftwagen üblich sind, kommt dem Montageträger eine erhebliche Bedeutung zu, was zum einen seine Funktionalität im Hinblick auf die daran anzuordnenden Fahrzeugkomponenten und zum anderen das Design des Montageträger-Oberteils betrifft, welches in zweifacher Hinsicht von Bedeutung ist. Zum einen werden am Montageträger-Oberteil die Fahrzeug-Frontscheinwerfer aufgenom-men, die mit den in die Karosserieaußenhaut des Fahrzeugs einge-fügten Scheiben ein wesentliches Designmerkmal an der Frontseite des Fahrzeugs darstellen. Ändert sich von Fahrzeugmodell zu Fahrzeugmodell die Scheinwerfergestaltung, sind die Scheinwerferträger und -aufnahmen am Montageträger-Oberteil entsprechend anzupassen. Zum anderen ist für den sogenannten Blick unter die Motorhaube das Aussehen des oberen Querträgers am Montageträger-Oberteil, bei dem es sich in der Regel um den Schloßquerträger handelt, wegen der Qualitätsanmutung wichtig. Deshalb wird für die sichtbaren Bereiche des oberen Querträgers am Montageträger ein ansprechendes Design angestrebt, so kommt es auch hier darauf an, für das betreffende Fahrzeugmodell eine individuell optimale Lösung zu finden. In bekannter Ausführung umfassen deshalb die Montageträger für Fahrzeugfrontends sowohl die vom Design beeinflußten Bauteile wie auch die ausschließlich technischen Bedingungen entsprechenden Teile. So ist bei einer Modellreihe für jede Designvariante, soweit es den Fahrzeugfrontbereich betrifft, der Einsatz eines geänderten Montageträgers erforderlich.

EP 1 072 476 offenbart eine Montageträger-Baureihe nach dem Oberbegriff des Anspruchs 1.

Viele Kraftfahrzeughersteller verfolgen aus Kostengründen eine Plattformstrategie, um wichtige technische Komponenten für mehrere Fahrzeugmodelle gleich ausführen zu können, es handelt sich bei diesen Komponenten um sogenannte Wiederholteile. Nur die designrelevanten Bauteile, wie Scheinwerfer, Stoßfängerüber-züge oder Karosserieaußenhautteile, müssen individuell ausgebildet werden. Der Erfindung liegt deshalb die Aufgabe zugrunde, eine Baugruppe zum Zusammenstellen von Frontends der eingangs genannten Art zu schaffen, bei welcher der Aufwand für die Anpassung der Montageträger an die im äußeren Design voneinander verschiedenen Varianten einer Fahrzeugmodellreihe, bei welcher für den Fahrzeugaufbau die gleiche Plattform vorgesehen ist, verringert ist.

Diese Aufgabe wird durch die Kennzeichnende Merkmale des Anspruchs 1 gelöst.

Für die Erfindung ist wesentlich, daß mit dem gleichen Montageträger-Unterteil und den damit kombinierbaren Montageträger-Oberteilen die gesamte Palette der Fahrzeuge einer Modellreihe abgedeckt werden kann, die ein unterschiedliches äußeres Front-Design aufweisen und deren Aufbau mit den technischen, nicht vom Design beeinflußten Bauteilen auf der gleichen Plattform basiert. Die unterschiedlichen, mit dem gleichen Unterteil verwendbaren Oberteile der Montageträger ermöglichen in analoger Weise bei den Frontends die Differenzierung zwischen den designunabhängigen und den designabhängigen Bauteilen, man hat es daher mit einem plattformspezifischen Unterteil und mit fahrzeugspezifischen Oberteilen der Montageträger zu tun, die sowohl für die Fahrzeugerstausstattung als auch für Reparaturen Kostenvorteile mit sich bringen, weil sie unabhängig voneinander austauschbar sind. So sind das jeweilige Oberteil und das Unterteil des betreffenden Montageträgers zweckmäßig mittels Verschraubungen lösbar miteinander verbunden.

Vorteilhafte Ausgestaltungsmerkmale der Erfindung ergeben sich aus den Unteransprüchen.

Die Erfindung wird nachfolgend anhand der Zeichnung an Ausführungsbeispielen noch näher erläutert. In der Zeichnung zeigen:
- Fig. 1: einen Montageträger in schematischer, perspektivischer Darstellung in erster Ausführung,
- Fig. 2: das Oberteil des Montageträgers nach Fig. 1,
- Fig. 3: ein anstelle des Oberteils für den Montageträger nach den Figuren 1 und 2 verwendbares Oberteil,
- Fig. 4: das Unterteil des Montageträgers nach Fig. 1 und
- Fig. 5: einen Montageträger, der mit dem Montageträger-Oberteil gemäß Fig. 3 und dem Unterteil nach Fig. 3 versehen ist.

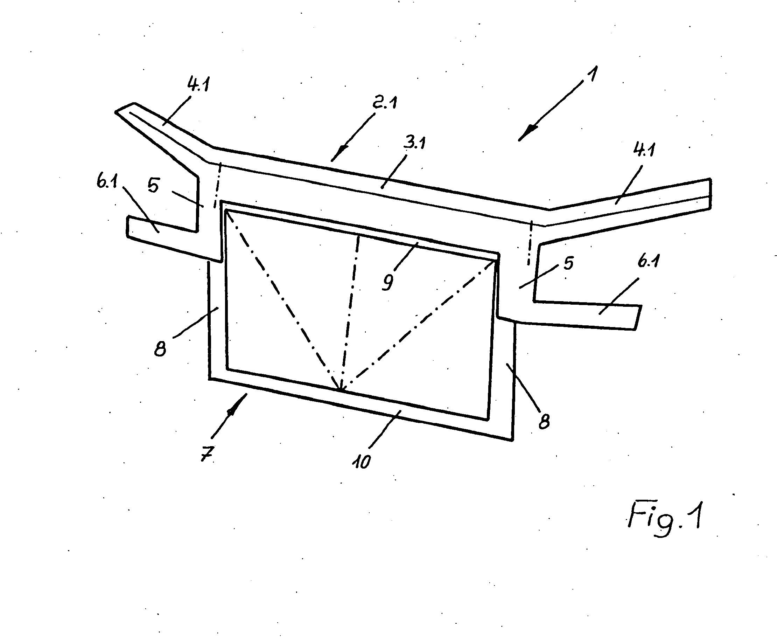

Der Montageträger 1 nach Fig. 1 ist mit einem Oberteil 2.1 versehen, welches einen am Montageträger 1 oberen Querträger 3.1 aufweist, der in der Einbaulage bei dem betreffenden Fahrzeug als Schloßquerträger fungiert. Dieser Querträger 3.1 setzt sich in leicht nach hinten hin abgewinkelten Trägerarmen 4.1 fort, die in der Einbaulage des Montageträgers 1 mit der seitlichen Karosseriestruktur des Fahrzeugs verschraubt werden.

Am Übergang zwischen dem oberen Querträger 3.1 und seinen seitlichen Trägerarmen 4.1 schließen nach unten hin schalenförmige Ansätze 5 an, von denen nach seitlich außen vorstehende Scheinwerferträger 6.1 abgewinkelt sind, die als Kragarme mit freien Enden ausgeführt sind.

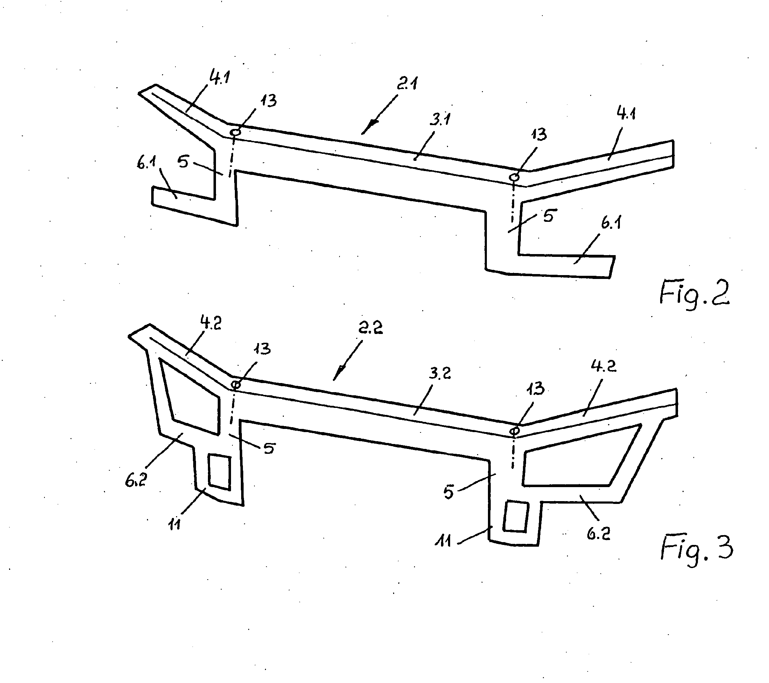

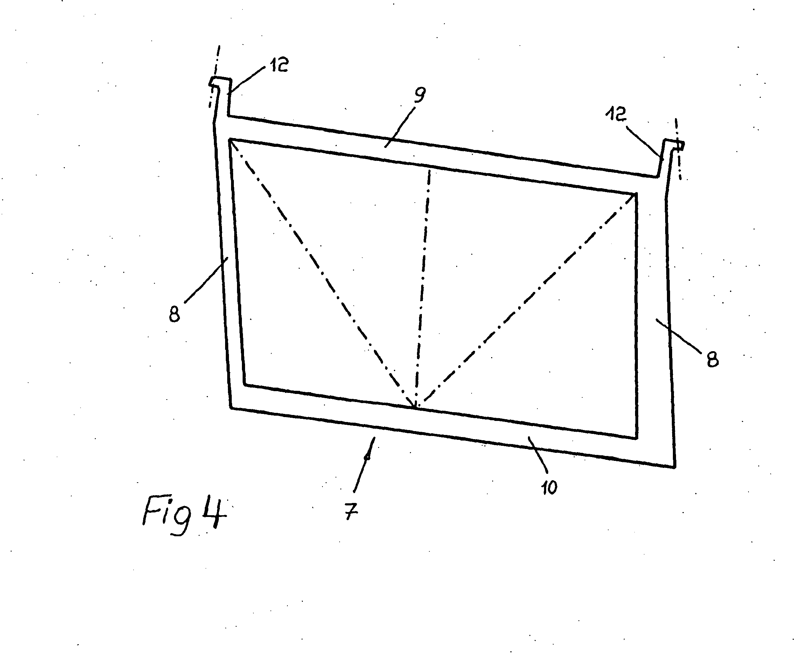

Der Montageträger 1 weist weiter ein Unterteil 7 auf, welches mit seitlichen Vertikalträgern 8 versehen sind. Diese Vertikalträger 8 greifen in die schalenförmigen Ansätze 5 am oberen Querträger 3.1 ein, und im Bereich dieser Ansätze 5 sind das Unterteil 7 und das Oberteil 2.1 des Montageträgers 1 miteinander verschraubt. Wie hierzu Fig. 4 zeigt, sind am Unterteil 7 Befestigungsarme 13 vorgesehen, welche die Ansätze 5 am oberen Querträger 3.1 von unten her hintergreifen und mit Gegeneinrichtungen 13 am Querträger 3.1 zum Verschrauben zusammenwirken, die in Fig. 2 und 3 angedeutet sind.

Das Unterteil 7 ist in Form eines rechteckigen Rahmens ausgeführt und dazu mit einem oberen Querholm 9 versehen, welcher die Oberenden der Vertikalträger 8 miteinander verbindet. Es weist ferner einen unteren Querholm 10 auf, welcher sich zwischen den Unterenden der Vertikalträger 8 erstreckt. In dem Unterteil 7 des Montageträgers 1 werden in der Einbaulage Kühlkomponenten des betreffenden Fahrzeugs aufgenommen, so sorgt die Rechteckform des Unterteils 7 für einen ausreichenden Kühlluftdurchlaß mit einer großen Durchströmungsfläche. Je nach den aufzunehmenden Kräften kann das rahmenförmige Unterteil 7 des Montageträgers 1 im Innern mittels diagonal verlaufender oder vertikaler Streben verstärkt sein, was durch strichpunktierte Linien angedeutet ist.

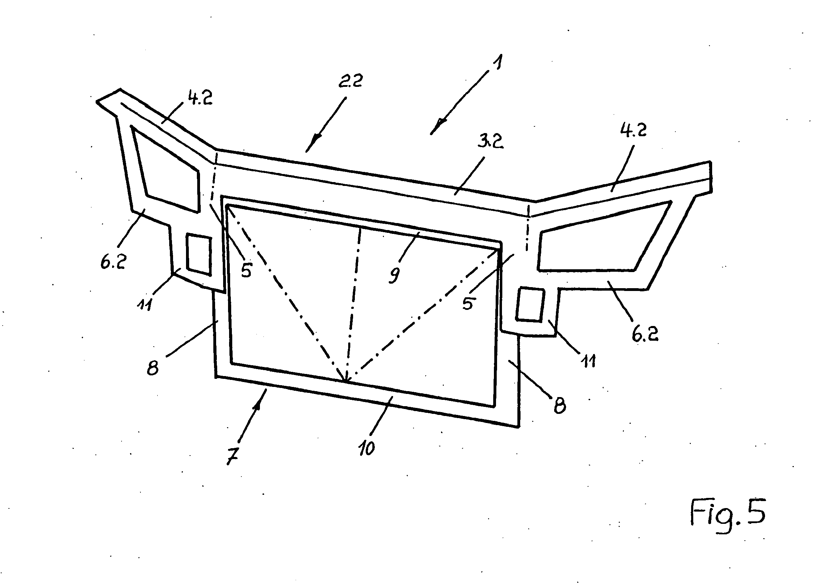

Fig. 2 zeigt das gleiche Montageträger-Obergestell 2.1 wie Fig. 1. Das Oberteil 2.1 ist einem weiteren Oberteil 2.2, welches aus Fig. 3 ersichtlich ist, gegenübergestellt, welches mit dem gleichen Montageträger-Unterteil 7 wie in Fig. 4 dargestellt, zu einem Montageträger 1 zusammengefügt werden kann, wie er sich aus Fig. 5 ergibt.

So hat das Montageträger-Oberteil 2.2 als eine der möglichen Varianten, die mit dem Montageträger-Unterteil 7 kombiniert werden können, anders gestaltete Scheinwerferträger 6.1, auch kann der obere Querträger 3.2 geänderten Designerfordernissen angepaßt sein. Die Scheinwerferträger 6.2 sind an die seitlichen Trägerarme 4.2 des oberen Querträgers 3.2 angebunden und bilden sogenannte Aufnahmeaugen für die Fahrzeugfrontscheinwerfer. Die schalenförmigen Ansitze 5 des Montageträger-Oberteils 2.2 sind grundsätzlich die gleichen wie die nach dem Ausführungsbeispiel der Figuren 1 und 2, um daran das unveränderte Montageträger-Unterteil 7 verschrauben zu können. Für weitere Aufnahme-Befestigungsmöglichkeiten schließen hier an die vertikalen Ansätze 5 weiter nach unten reichende Stege 11 an.

Die Oberteile 2.1, 2.2 für die Montageträger 1, die den Designvarianten einer Fahrzeug-Modellreihe angepaßt sind, bestehen vorzugsweise aus einem Metall-Kunststoffverbund, wozu sich sowohl ein kunststoffabgedecktes Metallprofil wie auch eine Hybridlösung anbietet.

Das mit den designabhängigen Montageträger-Oberteilen 2.1, 2.2 fügbare, plattformabhängige Unterteil 7 kann aus einzelnen Metallprofilen zusammengesetzt, als Kunststoffspritzgußteil oder als Metallhybridteil hergestellt sein. Der obere Querholm 9 des Unterteils 7 kann bei entsprechend steifer Ausführung insbesondere in Stahl Funktionen des oberen Querträgers 3.1, 3.2 der Montageträger-Oberteile 2.1, 2.2 übernehmen, indem an ihm Befestigungspunkte für das Haubenschloß des betreffenden Fahrzeugs angeordnet werden.

## Patentansprüche

1. Montageträger-Baureihe für Frontends von auf einer gemeinsamen Plattform basierenden Fahrzeugaufbauten von Personen- und Kleinlastkraftwagen, bestehend aus Montageträgern (1), welche jeweils ein Oberteil (2.1, 2.2) mit zumindest einem oberen Querträger (3.1, 3.2) sowie seitlich wegstehenden Scheinwerferträgern (6.1, 6.2) und ein Unterteil (7) mit wenigstens zwei seitlichen Vertikalträgern (8) aufweisen, wobei die Vertikalträger (8) des Unterteils (7) an den oberen Querträger (3.1, 3.2) des Oberteils (2.1, 2.2) anschließen,
**dadurch gekennzeichnet,**
**daß** die Oberteile (2.1, 2.2) und die Unterteile (7) für die Montageträger (1) separate, wahlweise miteinander kombinierbare Bauteile sind, wobei die Unterteile (7) in Anpassung an die gemeinsame Plattform der Fahrzeugaufbauten miteinander gleich ausgebildet sind und die Oberteile (2.1, 2.2) in voneinander verschiedenen Varianten ausgeführt sind, die in Abhängigkeit vom äußeren Design des jeweiligen Fahrzeugaufbaus gestaltet sind.

2. Baureihe nach Anspruch 1,
**dadurch gekennzeichnet,**
**daß** die Oberteile (2.1, 2.2) und die Unterteile (7) für die Montageträger (1) aufeinander abgestimmte Einrichtungen (12, 13) zum Verschrauben miteinander haben.

3. Baureihe nach Anspruch 1 oder 2,
**dadurch gekennzeichnet,**
**daß** die Unterteile (7) für die Montageträger (1) jeweils einen oberen Querholm (9) aufweisen, welcher die seitlichen Vertikalträger (8) an ihre Oberenden miteinander verbindet.

4. Baureihe nach einem der Ansprüche 1 - 3,
**dadurch gekennzeichnet,**
**daß** die Unterteile (7) für die Montageträger (1) jeweils einen unteren Querholm (10) aufweisen, welcher die Vertikalträger (8) an ihren Unterenden miteinander verbindet.

5. Baureihe nach Anspruch 3 und 4,
**dadurch gekennzeichnet,**
**daß** die Unterteile (7) für die Montageträger (1) mit ihren seitlichen Vertikalträgern (8), den oberen Querholmen (9) und den unteren Querholmen (10) als Rahmen mit einer rechteckigen Grundform ausgeführt sind.

6. Baureihe nach einem der Ansprüche 3 - 5,
**dadurch gekennzeichnet,**
**daß** die Unterteil (7) für die Montageträger (1) mit ihren seitlichen Vertikalträgern (8), den oberen Querholmen (9) und den unteren Querholmen (10) in Stahl ausgeführt sind.

7. Baureihe nach einem der Ansprüche 1 - 5,
**dadurch gekennzeichnet,**
**daß** die Oberteile (2.1, 2.2) und/oder die Unterteile (7) für die Montageträger (1) Formteile aus einem Kunststoff oder einem Kunststoff -Metall- Verbund sind.

8. Baureihe nach Anspruch 7,
**dadurch gekennzeichnet,**
**daß** an dem oberen Querträger (3.1, 3.2) der Oberteile (2.1, 2.2) für die Montageträger (1) nach unten vorstehende, schalenförmige Ansätze (5) angeformt sind, die bei dem jeweiligen, zusammengefügten Montageträger die Vertikalträger (8) des Unterteils (7) übergreifen.

## Claims

1. Assembly support product line for front ends of vehicle bodies based on a common platform for motor cars and small commercial vehicles, consisting of assembly supports (1) which each consist of an upper part (2.1, 2.2) having at least one upper cross member (3.1, 3.2) as well as laterally protruding headlamp supports (6.1, 6.2), and of a lower part (7) having at least two side vertical supports (8), wherein the vertical supports (8) of the lower part (7) adjoin the upper cross member (3.1, 3.2) of the upper part (2.1, 2.2),
**characterised in that** the upper parts (2.1, 2.2) and the lower parts (7) for the assembly supports (1) are separate component parts which can be selectively combined with one another, wherein the lower parts (7) are designed identical with one another to match the common platform of the vehicle bodies and the upper parts (2.1, 2.2) are designed in various different versions which are configured in dependence on the exterior design of the relevant vehicle body.

2. Product line according to claim 1 **characterised in that** the upper parts (2.1, 2.2) and the lower parts (7) for the assembly supports (1) have mutually conforming fittings (12, 13) for screwing to one another.

3. Product line according to claim 1 or 2 **characterised in that** the lower parts (7) for the assembly supports (1) each have an upper cross beam (9) which connects the side vertical supports (8) to one another at their upper ends.

4. Product line according to one of claims 1 to 3 **characterised in that** the lower parts (7) for the assembly supports (1) each have a lower cross beam (10) which connects the vertical supports (8) to one another at their lower ends.

5. Product line according to claims 3 and 4 **characterised in that** the lower parts (7) for the assembly supports (1) are designed together with their side vertical supports (8), upper cross beams (9) and lower cross beams (10) as one frame with a rectangular outline.

6. Product line according to one of claims 3 to 5 **characterised in that** the lower part (7) for the assembly supports (1) together with its side vertical supports (8), upper cross beams (9) and lower cross beams (10) are made of steel.

7. Product line according to one of claims 1 to 5 **characterised in that** the upper parts (2.1, 2.2) and/or the lower parts (7) for the assembly supports (1) are moulded parts made from plastics or a plastics-metal compound.

8. Product line according to claim 7 **characterised in that** downwardly protruding dish-like attachments (5) are moulded on the upper cross member (3.1, 3.2) of the upper parts (2.1, 2.2) for the assembly supports (1) and when the relevant assembly support is assembled engage over the vertical supports (8) of the lower part (7).

## Revendications

1. Gamme de composants de support de montage pour extrémités frontales de structures de carrosseries de voitures particulières et de fourgonnettes, ayant pour base une plateforme commune, lesquels composants consistent en des supports de montage (1), qui présentent chacun une partie supérieure (2.1, 2.2) avec au moins un support transversal supérieur (3.1, 3.2) ainsi que des porte-projecteurs (6.1, 6.2) faisant saillie latéralement, et une partie inférieure (7) avec au moins deux supports verticaux (8) latéraux, lesdits supports verticaux (8) de la partie inférieure (7) se raccordant aux supports transversaux supérieurs (3.1, 3.2) de la partie supérieure (2.1, 2.2),
**caractérisée en ce que** les parties supérieures (2.1, 2.2) et les parties inférieures (7) des supports de montage (1) sont des composants séparés, pouvant être combinés entre eux, au choix, les parties inférieures (7) étant conçues de même manière, en adaptation à la plateforme commune des structures de carrosseries de véhicules automobiles, et les parties supérieures (2.1, 2.2) étant exécutées dans différentes variantes, conçues en fonction du design extérieur respectif de la carrosserie du véhicule automobile.

2. Gamme de composants selon la revendication 1,
**caractérisée en ce que** les parties supérieures (2.1, 2.2) et les parties inférieures (7) des supports de montage (1) sont des systèmes (12, 13) adaptés les uns aux autres pour être vissés ensemble.

3. Gamme de composants selon revendication 1 ou 2, **caractérisée en ce que** les parties inférieures (7) des supports de montage (1) présentent chacune un longeron transversal supérieur (9), qui relie ensemble les supports verticaux (8) latéraux, à leurs extrémités supérieures.

4. Gamme de composants selon l'une des revendications 1 à 3,
**caractérisée en ce que**
les parties inférieures (7) des supports de montage (1) présentent un longeron transversal inférieur (10), qui relie ensemble les supports verticaux (8) latéraux, à leurs extrémités inférieures.

5. Gamme de composants selon l'une des revendications 3 et 4,
**caractérisée en ce que**
les parties inférieures (7) des supports de montage (1), avec leurs supports verticaux (8), les longerons transversaux supérieurs (9) et les longerons transversaux inférieurs (10), sont exécutés en tant que cadre, de forme fondamentale rectangulaire.

6. Gamme de composants selon l'une des revendications 3 à 5,
**caractérisée en ce que**
les parties inférieures (7) des supports de montage (1), avec leurs supports verticaux (8) latéraux, les longerons transversaux supérieurs (9) et les longerons transversaux inférieurs (10), sont exécutés en acier.

7. Gamme de composants selon l'une des revendications 1 à 5,
**caractérisée en ce que**
les parties supérieures (2.1, 2.2) et / ou les parties inférieures (7) des supports de montage (1) sont des pièces moulées en matière plastique ou en composite de matière plastique et acier.

8. Gamme de composants selon la revendication 7,
**caractérisée en ce que,**
partant du support transversal supérieur (3.1, 3.2) des parties supérieures (2.1, 2.2) des supports de montage (1), sont formés des appendices (5) en forme de coquille en saillie vers le bas, qui chevauchent d'en haut les supports verticaux (8) de la partie inférieure (7) du support de montage respectif assemblé.
